# EUROPÄISCHE PATENTSCHRIFT

(11) **EP 0 577 635 B1**
(45) Veröffentlichungstag und Bekanntmachung des Hinweises auf die Patenterteilung: **21.08.1996**
(21) Anmeldenummer: 92906544.9
(22) Anmeldetag: 16.03.1992
(51) Int. Cl.: G01N 1/00, G01N 1/28

(54) **EINRICHTUNG ZUR VERDAMPFUNG KLEINER MENGEN EINES FLUIDS FÜR ANALYTISCHE ZWECKE**
DEVICE FOR EVAPORATING SMALL QUANTITIES OF A FLUID FOR ANALYTICAL PURPOSES
EVAPORATEUR DE PETITES QUANTITES DE FLUIDE A DES FINS D'ANALYSE

(30) Priorität: 25.03.1991 DE 9103652 U
(43) Veröffentlichungstag der Anmeldung: 12.01.1994
(73) Patentinhaber: SIEMENS AKTIENGESELLSCHAFT, 80333 München (DE)
(72) Erfinder: MUELLER, Friedhelm, D-7515 Linkenheim (DE)
(86) Internationale Anmeldenummer: DE9200224
(87) Internationale Veröffentlichungsnummer: WO9216823

(56) Entgegenhaltungen:
- WO-A-87/01205
- WO-A-91/00508
- DE-A- 4 031 020
- US-A- 3 751 660
- US-A- 3 942 792
- PATENT ABSTRACTS OF JAPAN vol. 12, no. 297 (C-519)12. August 1988 & JP-A-63 065 901 ( HITACHI LDT ) 24 March 1988
- REVIEW OF SCIENTIFIC INSTRUMENTS. Bd. 52, Nr. 5, Mai 1981, NEW YORK US Seiten 731 - 734; L.J. HENDRICKS: 'Sample chamber for mapping chemical microstructure'

## Beschreibung

Die Erfindung bezieht sich auf eine Einrichtung gemäß Oberbegriff des Anspruchs 1.

Zur Analyse von aus mehreren Komponenten bestehenden Fluiden, insbesondere bei der Überwachung von Abwässern auf darin gelöste, verunreinigende Stoffe, sind Proben zu entnehmen und für die Analyse mittels Gaschromatographen oder Mikrowellenspektrometern aufzubereiten, d. h., sie in dampf- bzw. gasförmigen Zustand zu überführen.
Dazu wurden bisher kleine Probenmengen des Fluids in einen Verdampfer eingebracht, dort verdampft und in den Analysesystemen weiterverarbeitet. In vielen Anwendungsfällen ergaben sich dabei erhebliche Schwierigkeiten, da sich gelöste, nicht oder schwer verdampfbare Fluidkomponenten im Verdampfer niederschlugen und ihn nach kurzer Zeit verstopften. Außerdem können die Niederschläge zu chemischen Reaktionen mit den Meßkomponenten führen und die Messung mehr oder weniger stark verfälschen.
Ein Herausfiltern bestimmter Stoffe (Salze, Kalk, Eiweiß) ist in der Regel nicht möglich, da sie sich in gelöstem Zustand befinden. Es war deshalb bisher weder eine kontinuierliche Verdampfung mit anschließender Gasdosierung noch diskontinuierliche Direktinjektionen in chromatographische Systeme über einen längeren Zeitraum möglich.

Es besteht demgemäß die Aufgabe, eine Einrichtung zu schaffen, mit der die Probenaufbereitung ohne die oben genannten Nachteile erfolgen kann und insbesondere auch hochsiedende und gut lösliche Substanzen in niedrigen Konzentrationen, die als Komponenten des Fluids analysiert werden sollen, erfaßbar sind.

Eine Lösung der Aufgabe wird in einer Einrichtung gesehen, die die Merkmale des Anspruchs 1 aufweist.

Mit Hilfe des gebündelten Mikrowellenstrahls, dessen Frequenz so gewählt ist, daß sie im Bereich hoher Absorption des Fluids liegt, wird eine kleine Menge aus der flüssigen Oberfläche als Aerosol ausgetragen, verdampft und dem Analysensystem zugeführt. Die zu analysierenden Verunreinigungen oder Komponenten des Fluids werden in repräsentativen Anteilen in die Gasphase überführt.
Da Wasser Mikrowellenstrahlung stark absorbiert, erfolgt eine geringe Durchdringung von im wesentlichen aus Wasser bestehenden Fluiden, so daß eine starke Erhitzung der Oberfläche durch die hohe Energiedichte des Strahls bei gleichzeitig niedriger Temperatur der umgebenden Flüssigkeit erreicht wird.
Niederschläge und Ablagerungen von unverdampfbaren Stoffen erfolgen nicht, sie verbleiben in dem übrigen Fluid.
Ein besonderer Vorteil ist darin zu sehen, daß die Probenaufnahme in situ vorgenommen werden kann, d. h., es können Proben kontinuierlich oder diskoninuierlich aus größeren Flüssigkeitsvolumen sowie aus strömenden Flüssigkeiten in Leitungen oder Gerinnen entnommen werden.
Der mechanisch-konstruktive Aufbau der Einrichtung ist sehr einfach. Der Mikrowellenstrahler kann außerhalb des das Fluid enthaltenden oder führenden Gefäßes aus mikrowellendurchlässigem Material angebracht werden.
Zur Probennahme in fließenden Fluiden wird ein glockenartiger Behälter verwendet, welcher mit seiner unteren, offenen Stirnseite in das Fluid eintauchbar ist, so daß innerhalb eine beruhigte Flüssigkeitsoberfläche vorhanden ist.

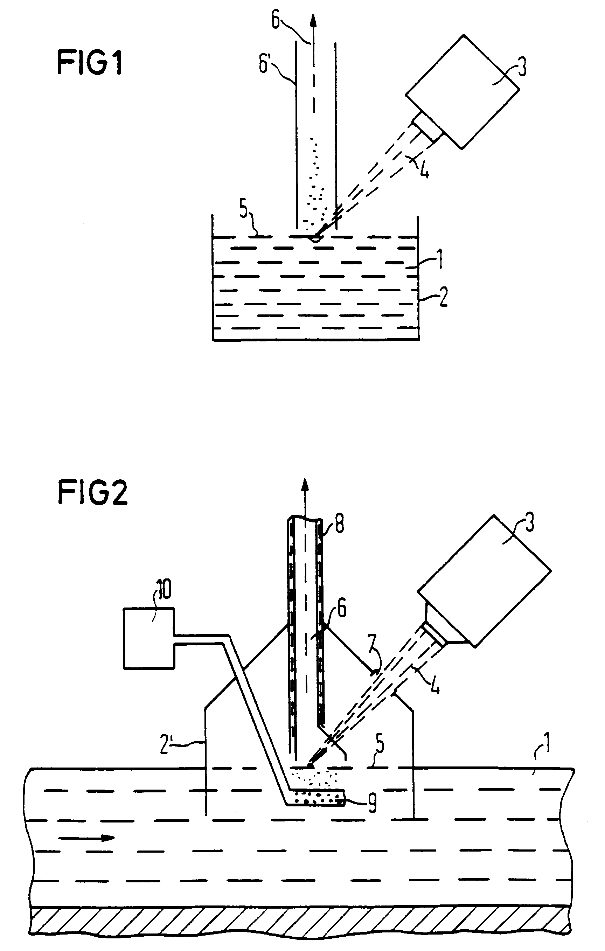

Zur Erläuterung der Erfindung ist in der Figur 1 das Funktionsprinzip dargestellt.
Figur 2 zeigt eine Ausführungsbeispiel für die Probennahme in fließenden Fluiden.

Figur 1: Das zu untersuchende Fluid 1, beispielsweise Trinkwasser oder Abwasser, dessen Schadstoffbelastung überwacht werden soll, befindet sich in einem Gefäß 2.
Ein in einem Mikrowellenstrahler 3 erzeugter Strahl 4 mit eng gebündelter Strahlungscharakteristik ist auf die Oberfläche 5 des Fluids 1 gerichtet, wo er nahezu punktförmig auftrifft und in einem kleinen Bereich durch die hohe Energiedichte eine Verdampfung des Fluids bewirkt, bei welcher sehr kleine Tröpfchen als Aerosol mit herausgerissen und durch eine zu dem Analysensystem führende Absaugeinrichtung 6 mit einem Rohr 6' aus mikrowellendurchlässigem Werkstoff abgeführt werden.

In Figur 2 strömt das Fluid 1 in einer Leitung großen Querschnitts oder in einem offenen Gerinne. Das Gefäß 2' ist glockenförmig ausgebildet, es taucht mit seiner unteren offenen Stirnseite in das Fluid 1 ein, so daß innerhalb des Gefäßes eine geringe Strömungsgeschwindigkeit an der Oberfläche 5 zur schnellen Aufheizung und Probennahme zur Verfügung steht. Das Gefäß 2' besteht aus mikrowellendurchlässigem Material bzw. in seiner Wand ist ein Fenster 7 vorhanden, durch welches der scharf gebündelte, im Mikrowellenstrahler 3 erzeugte Mikrowellenstrahl 4 in das Innere des Gefäßes 2' treten kann und dort auf die Oberfläche 5 trifft. Das aus mikrowellendurchlässigem Material hergestellte Rohr 6' hat an seinem unteren Ende eine sich senkrecht zur Mittelachse des Strahls 4 erstreckende Erweiterung, die es erlaubt, es ohne merkbare Beeinträchtigung des Mikrowellenstrahls 4 bis knapp über die Oberfläche 5 abzusenken.
Um eine Kondensation des abgesaugten Aerosol/Wasserdampfgemisches zu verhindern, kann das Rohr 6' mit einer Heizvorrichtung 8 umgeben werden. Beim diskontinuierlichen Betrieb der Einrichtung kann diese nur zu den Entnahmezeitpunkten in das Fluid abgesenkt werden, so daß sich immer frisches Fluid in repräsentativer Zusammensetzung in dem Gefäß 2' befindet.

Enthält das Fluid Komponenten, deren Löslichkeit in einem Inertgas um ein Vielfaches größer ist als in Wasser, so läßt sich die Probennahme durch zusätzliche Anwendung eines Gasextraktionsverfahrens verbessern.
Dazu wird in dem Fluid 1 unterhalb des Auftreffpunkts des Strahls 4 auf die Oberfläche 5 ein Gasaustrittskörper 9, z. B. eine Fritte, angeordnet, der aus der Gasquelle 10 mit Extraktionsgas, z. B. mit hochreinem Stickstoff oder Edelgasen, gespeist wird.

## Patentansprüche

1. Einrichtung zur Verdampfung kleiner Mengen eines Fluids für analytische Zwecke, **gekennzeichnet durch**
- einen Mikrowellenstrahler (3) mit auf die Oberfläche (5) des Fluids (1) gerichteter, gebündelter Strahlungscharakteristik,
- ein oberhalb der Auftrefffläche des Strahls (4) angeordnetes Rohr (6') einer Absaugeinrichtung (6).

2. Einrichtung nach Anspruch 1, **dadurch gekennzeichnet,** daß der Mikrowellenstrahler (3) außerhalb eines das Fluid (1) enthaltenden Gefäßes (2') aus mikrowellendurchlässigem Material angeordnet ist.

3. Einrichtung nach Anspruch 2, **dadurch gekennzeichnet,** daß das Gefäß (2') mit dem Rohr (6') mit seiner unteren, offenen Stirnseite in das in einer Leitung bzw. einem Gerinne strömende Fluid (1) eintauchbar ist.

4. Einrichtung nach Anspruch 1 oder 3, **dadurch gekennzeichnet,** daß das Rohr (6') der Absaugeinrichtung (6) mit einer Heizeinrichtung (8) versehen ist.

5. Einrichtung nach Anspruch 1 oder 3, **dadurch gekennzeichnet,** daß in dem Fluid (1) unterhalb des Auftreffpunkts des Strahls (4) ein aus einer Gasquelle (10) gespeister Gasaustrittskörper (9) angeordnet ist.

6. Einrichtung nach Anspruch 5, **dadurch gekennzeichnet,** daß der Gasaustrittskörper eine Fritte ist.

7. Einrichtung nach Anspruch 1, **dadurch gekennzeichnet,** daß das Fluid aus Wasser mit darin gelösten, suspendierten oder emulgierten Stoffen besteht.

## Claims

1. Device for evaporating small amounts of a fluid for analytical purposes, characterised by
- a microwave radiator (3) having a focused radiation characteristic which is directed onto the surface (5) of the fluid (1),
- a tube (6') of a suction device (6), which tube is arranged above the impact surface of the ray (4).

2. Device according to claim 1, characterised in that the microwave radiator (3) is arranged outside a vessel (2') which contains the fluid (1) and is made of microwave-permeable material.

3. Device according to claim 2, characterised in that the bottom, open face of the vessel (2'), together with the tube (6'), can be immersed into the fluid (1) which is flowing in a line or a gutter.

4. Device according to claim 1 or 3, characterised in that the tube (6') of the suction device (6) is provided with a heating device (8).

5. Device according to claim 1 or 3, characterised in that arranged in the fluid (1), beneath the point of impact of the ray (4), is a gas-outlet body (9) which is fed from a gas source (10).

6. Device according to claim 5, characterised in that the gas-outlet body is a frit.

7. Device according to claim 1, characterised in that the fluid consists of water having substances dissolved, suspended or emulsified therein.

## Revendications

1. Dispositif d'évaporation de petites quantités d'un fluide à des fins d'analyse, caractérisé par
- un émetteur (3) de micro-ondes ayant un diagramme de rayonnement en faisceau dirigé sur la surface (5) du fluide (1),
- un tube (6'), disposé au-dessus de la surface d'incidence du faisceau (4), d'un dispositif (6) d'aspiration.

2. Dispositif suivant la revendication 1, caractérisé en ce que l'émetteur (3) de micro-ondes est disposé à l'extérieur d'un récipient (2') contenant le fluide (1) et en un matériau laissant passer les micro-ondes.

3. Dispositif suivant la revendication 2, caractérisé en ce que le récipient (2') comportant le tube (6') peut être immergé par son côté frontal ouvert inférieur dans le fluide (1) s'écoulant dans une conduite ou dans une rigole.

4. Dispositif suivant la revendication 1 ou 3, caractérisé en ce que le tube (6') du dispositif (6) d'aspiration est muni d'un dispositif (8) de chauffage.

5. Dispositif suivant la revendication 1 ou 3, caractérisé en ce qu'un corps (9) de sortie de gaz alimenté par une source (10) de gaz est disposé dans le fluide (1) en-dessous du point d'incidence du faisceau (4).

6. Dispositif suivant la revendication 5, caractérisé en ce que le corps de sortie de gaz est une fritte.

7. Dispositif suivant la revendication 1, caractérisé en ce que le fluide est de l'eau dans laquelle des substances sont dissoutes, en suspension ou émulsionnées.
